# EUROPÄISCHE PATENTSCHRIFT

(11) **EP 2 019 799 B1**
(45) Veröffentlichungstag und Bekanntmachung des Hinweises auf die Patenterteilung: **14.09.2011**
(21) Anmeldenummer: 07764543.0
(22) Anmeldetag: 22.05.2007
(51) Int. Cl.: B65G 1/137

(54) **SEPARATE PACKSTATION**
SEPARATE PACKING STATION
STATION DE REMPLISSAGE SÉPARÉE

(30) Priorität: 24.05.2006 DE 102006025617
(43) Veröffentlichungstag der Anmeldung: 04.02.2009
(73) Patentinhaber: SSI Schäfer Noell GmbH Lager-und Systemtechnik, 97232 Giebelstadt (DE)
(72) Erfinder: SCHÄFER, Gerhard, 57290 Neunkirchen (DE)
(74) Vertreter: Witte, Weller & Partner
(86) Internationale Anmeldenummer: PCT/EP2007/004515
(87) Internationale Veröffentlichungsnummer: WO 2007/134832

(56) Entgegenhaltungen:
- DE-A1- 3 814 101
- US-A- 3 379 321
- US-A- 4 189 273

## Beschreibung

Die vorliegende Erfindung betrifft eine kommissionieranlage mit einem Arbeitsplatz zum Packen von zu kommissionierenden Artikeln auf einen Versandträger, insbesondere auf eine Palette oder in einen Roll-Container, wobei der Arbeitsplatz umfasst: eine Packstation; eine Bühne, auf der die Packstation angeordnet ist; eine Versandträgerstation, die unterhalb der Bühne angeordnet ist; eine Hubeinrichtung zum Anheben eines leeren oder teilweise bepackten Versandträgers auf eine Höhe der Packstation, so dass der leere oder teilweise bepackte Versandträger mit zu kommissionierenden Artikeln bepackt werden kann, und zum Absenken fertig bepackter Versandträger.

Die vorliegende Erfindung betrifft ferner ein Verfahren zum Packen von zu kommissionierenden Artikeln auf einen Versandträger.

In Kommissionieranlagen gemäß dem Stand der Technik sind Arbeitsplätze zum Packen von zu kommissionierenden Artikeln bekannt, bei denen die Artikel einzeln über eine Fördertechnik zu einer Packstation transportiert werden. Die Kommissionierung erfolgt nach dem Prinzip "Ware zu Mann", das heißt ein Kommissionierer bewegt sich aus ergonomischen Gründen während eines Kommissioniervorgangs möglichst wenig, weshalb die zu kommissionierende Ware zum Kommissionierer hin transportiert wird.

Herkömmlicherweise endet die Fördertechnik in einer abfallend geneigten Rollenbahn mit freidrehenden oder getakteten Rollen, an deren unteren Ende die Packstation vorgesehen ist. Der Kommissionierer empfängt die einzelnen Artikel und packt sie in die Packstation.

Eine herkömmliche Packstation umfasst z.B. einen umrandeten Schacht, wobei der Kommissionierer die Artikel von oben in den Schacht packt. Im Schacht selbst ist beispielsweise eine vertikal bewegliche Palette angeordnet, auf die die zu kommissionierenden Artikel gepackt werden können. Sobald eine Schicht von Artikeln auf die Palette gepackt ist, wird die Palette üblicherweise um eine Schichthöhe abgesenkt, so dass ein Mitarbeiter (Packer) eine nächste Schicht mit Artikeln packen kann. Dieser Vorgang wird so oft wiederholt, bis alle zu einem Kommissionierauftrag gehörigen Artikel gepackt sind.

Die vertikal verfahrbare Palette wird anschließend an das untere Ende des Schachts bewegt. Anschließend wird der Versandträger (seitlich) aus dem Schacht herausbewegt und ggf. an einem entfernt gelegenen Ort mit einer Thermofolie umwickelt und verschweißt, um den Artikelstapel vor Verrutschen und Kippen zu schützen.

Eine Anlage dieser Art nach dem Oberbegriff von Anspruch 1 (Anlage) und von Anspruch 13 (verfahren) ist in der US 4,189,273 beschrieben.

Die zu kommissionierenden Artikel werden in einem Lager z.B. in sogenannten Durchlaufkanälen vereinzelt gespeichert. Unter einem Durchlaufkanal ist ein Kanal zu verstehen, der von seiner einen Endseite her mit Artikeln gespeist wird und an seinem gegenüberliegenden Ende geleert wird. Ein typischer Durchlaufkanal weist angetriebene Rollen auf. Je nach Kommissionierauftrag werden ein oder mehrere Artikel aus dem Durchlaufkanal herausgefördert und an eine weitere Fördertechnik abgegeben, die die abgegebenen Artikel zu dem entfernt gelegenen Arbeitsplatz transportiert. Üblicherweise werden diese Kanäle so dimensioniert, dass sie die Artikel einer kompletten Palette aus dem Wareneingang aufnehmen können. Diese Kanäle sind dann dementsprechend lang. Werden viele verschiedene Artikeltypen gelagert, wird das Lager sehr groß. Der Platzbedarf ist sehr hoch. Die Investitionskosten liegen entsprechend hoch.

Ein Problem bei diesem Konzept besteht darin, dass Artikel, die z.B. aufgrund der Natur ihrer Verpackung leicht beschädigt werden können (so genannte "nonconveyables" und "uglies"), nicht einzeln in Durchlaufkanälen gespeichert werden können.

Ein weiteres Problem ist darin zu sehen, dass Artikel, die statistisch sehr häufig pro Kommissionierauftrag vertreten sind (A-Artikel), bei Einzellagerung im Durchlaufkanal viele sogenannte Wechselspiele (Einzelspiele) erforderlich machen. Unter einem Wechselspiel wird jeder Wechsel eines Artikels zwischen Elementen, insbesondere einer Fördertechnik, der Kommissionieranlage verstanden. Die Abgabe des Artikels vom Durchlaufkanal an die Fördertechnik wird zum Beispiel als Wechselspiel bezeichnet. Die Übergabe des Artikels von der Fördertechnik an den Arbeitsplatz wäre ein weiteres Beispiel für ein Wechselspiel. Aus den Kanälen zu liefernde Artikel müssen dann "batchweise" abgerufen werden, um die erforderliche Leistung zu erreichen. Unter einer "Batch" versteht man die Zusammenfassung mehrerer Aufträge zu einer geordneten Menge von Aufträgen. Durch das batchweise Ausschleusen der Artikel aus den Kanälen entsteht ein Artikelmix, der an bzw. vor den Arbeitsplätzen aufgelöst werden muss. Dazu werden so genannte Sortierer eingesetzt.

Der Aufwand, der betrieben werden muss, um statistisch häufig vertretene Artikel einzulagern oder auszulagern, ist groß und reduziert somit den Durchsatz, das heißt die Anzahl der Artikel, die zum Beispiel pro Stunde tatsächlich kommissioniert und gepackt werden können. Solche Artikel benötigen außerdem viele Kanäle.

Es ist daher eine Aufgabe der vorliegenden Erfindung, ein Verfahren und eine Kommissionieranlage mit einem Arbeitsplatz zum Packen von zu kommissionierenden Artikeln bereitzustellen, mit denen ein höherer Durchsatz möglich ist und weniger Wechselspiele erforderlich sind. Insbesondere ist ein schonender Transport der Artikel zum Arbeitsplatz gewünscht.

Diese Aufgabe wird mit eine Kommissionieranlage mit einem Arbeitsplatz der eingangs erwähnten Art gelöst, bei dem ferner eine Fördertechnik für Ladehilfsmittel vorgesehen ist, die zu kommissionierende Artikel auf Ladehilfsmitteln, insbesondere auf Tablaren, derart zur Packstation fördert, dass entweder Artikel von der Bahn oder von der Fördertechnik kommissioniert werden können.

Die Kommissionieranlage mit einem Arbeitsplatz gemäß der vorliegenden Erfindung verfügt somit über zwei separate Zuführungen für zu kommissionierende Artikel. Eine erste Zuführung erfolgt über die herkömmliche Bahn. Über die Bahn werden einzelne Artikel zugeführt. Eine weitere Zuführung erfolgt jedoch über eine Fördertechnik, die vorzugsweise Tablare mit einer Vielzahl von zu kommissionierenden Artikeln (sortenrein) zur Packstation liefert. Die auf den Tablaren gelagerten Artikel stellen vorzugsweise sogenannte Schnellläufer dar, die statistisch häufig in Kommissionieraufträgen auftreten.

Anstatt z.B. 10 einzelne Artikel eines vorbestimmten Typs (vereinzelt) zur Packstation zu transportieren, werden nun Tablare zur Packstation transportiert, die mehrere Artikel des vorbestimmten Typs enthalten. Somit ist es möglich, die Anzahl der Wechselspiele von z.B. 10 auf 1 zu reduzieren. Ein Kommissionierer kann sowohl vereinzelte Artikel von der Bahn als auch Artikel von einem Tablar kommissionieren. Dadurch erhöht sich der Durchsatz an Artikeln bei gleichzeitiger Reduktion der Fördertechnikleistung. Es müssen weniger Artikel einzeln über die entsprechende Fördertechnik transportiert werden.

Gemäß einer bevorzugten Ausführung weist die Bahn packstationsseitig eine Ablageeinrichtung auf.

Die Ablageeinrichtung dient zur Zwischenlagerung von vereinzelten zu kommissionierenden Artikeln. Dies gibt einem Kommissionierer Zeit, um zu entscheiden, wo er den zu kommissionierenden Artikel auf den Versandträger packt, ohne dass der Artikel von der Bahn herunterfällt und möglicherweise beschädigt wird. Die Ablageeinrichtung stellt somit eine Art Puffer dar.

Insbesondere ist die Bahn nach Art einer weiteren Fördertechnik gebaut. Vorzugsweise ist die Bahn eine Rutsche.

Wenn die Bahn nach Art einer Fördertechnik aufgebaut ist, gestaltet sich der Übergang von der Fördertechnik zur Bahn einfach. Im Fall der Verwendung einer Rutsche werden die Artikel allein durch die Schwerkraft von der Fördertechnik zur Packstation transportiert. Eine Rutsche ist insbesondere dann von Vorteil, wenn ein Schieber als Ausschleusvorrichtung verwendet wird, um Artikel von der Fördertechnik auf die Bahn auszuschleusen. Außerdem kann eine Schwerkraftrollenbahn verwendet werden, die über freidrehende Rollen verfügt. Optional können auch angetriebene bzw. gebremste Rollen eingesetzt werden.

Ferner ist es bevorzugt, wenn die Bahn an eine Artikel-Fördertechnik zum Transportieren von zu packenden Artikeln von einem Artikellager zum Arbeitsplatz angekoppelt ist.

Die Artikelfördertechnik ermöglicht sowohl den Transport von vereinzelten Artikeln als auch von Artikeln, die auf Tablaren gelagert sind.

Insbesondere weist die Artikel-Fördertechnik stromaufwärts relativ zur Bahn eine Trennstation auf. Mit Hilfe der Trennstation können zu packende Artikel von Ladehilfsmitteln getrennt werden, so dass die Fördertechnik, zwischen Lager und Arbeitsplatz, zum Transportieren von einzelnen Artikeln sowie von Tablaren verwendet werden kann.

Um der Packstation vereinzelte Artikel zuzuführen, werden diese zuvor von den Tablaren getrennt, das heißt zwischen dem Lager und der Trennstation werden ausschließlich Artikel auf Tablaren transportiert, was zum einen den Durchsatz und zum anderen den Transport von zerbrechlichen und leicht zu beschädigenden Artikeln (auf Tablaren) ermöglicht.

Insbesondere weist die Packstation einen Packrahmen auf.

Der Packrahmen dient zur seitlichen Stabilisierung eines auf einem Versandträger zu bildenden Artikelstapels.

Gemäß einer weiteren bevorzugten Ausführungsform ist die Hubeinrichtung zwischen einer ersten Stellung und einer zweiten Stellung vertikal, insbesondere Packebenen-getaktet beweglich.

Sobald eine Packebene, das heißt eine Schicht aus gepackten Artikeln, fertig gepackt ist, wird der Versandträger, der auf der Hubeinrichtung gelagert ist, um eine Artikelschichthöhe abgesenkt, so dass eine nächste Schicht gepackt werden kann.

Weiterhin ist es von Vorteil, wenn die Hubeinrichtung in der ersten Stellung einen zu bepackenden Versandträger in einer Andienungshöhe bewegt, die individuell anpassbar ist und insbesondere in Hüfthöhe eines Packers liegt.

Mit einer so ausgebildeten Hubeinrichtung lassen sich höchste ergonomische Ansprüche an den Arbeitsplatz erfüllen. Unabhängig von der Körpergröße des Mitarbeiters wird der zu bepackende Versandträger immer in die ergonomisch richtige Höhe gebracht.

Ein weiterer Vorteil ist darin zu sehen, dass die Packstation manuell oder maschinell betrieben werden kann.

Dies ermöglicht einen hohen Automatisierungsgrad sowie eine hohe Modularität, da sowohl Maschine als auch Mensch zum Packen eingesetzt werden können. Planer von Kommissionieranlagen können die Kommissionieranlage also flexibel ausgestalten.

Gemäß einer weiteren Ausgestaltung umfasst die Packstation ein Lichtgitter, das derart über einem zu bepackenden Versandträger angeordnet ist, dass erfasst werden kann, ob ein Packer eine seiner Gliedmaßen im Bereich des zu bepackenden Versandträgers hat, um entsprechende Steuersignale zu erzeugen, mit denen die Bewegung der Hubeinrichtung gesteuert wird.

Mit einem Lichtgitter kann verhindert werden, dass der Versandträger abgesenkt wird, bevor der Packer den gerade zu packenden Artikel abgesetzt hat. Gleiches gilt für die umgekehrte Richtung, das heißt ein Anheben des Versandträgers während eines Packvorgangs wird verhindert. Diese Vorkehrungen dienen zur Erhöhung der Arbeitssicherheit sowie zur Reduzierung der Gefahr, dass Artikel beim Packen beschädigt werden, indem sie zum Beispiel tief fallen.

Vorzugsweise ist die Versandträgerstation an eine Versandträger-Fördertechnik angekoppelt.

Auf diese Weise können leere und/oder bepackte Versandträger auf einfache Weise zur Packstation transportiert werden. Dieser Vorgang kann automatisiert erfolgen.

Ferner ist es von Vorteil, wenn die Versandträgerstation eine Einrichtung zum automatisierten Wechseln von Versandträgern auf die bzw. von der Hubeinrichtung umfasst.

Durch diese Maßnahme wird der Automatisierungsgrad weiter erhöht.

Gemäß einer weiteren Ausführungsform ist unterhalb der Packstation eine Wickeleinrichtung vorgesehen, um gepackte Artikelschichten auf den Versandträgern mit einer Folie zu umwickeln.

Durch diese Maßnahme wird ein Verrutschen und Umkippen der gepackten Artikel verhindert.

Gemäß einer besonderen Ausgestaltung durchquert die Fördertechnik für Ladehilfsmittel einen Bereich, in dem sowohl die Packstation als auch das packstationsseitige Ende der Bahn angeordnet sind.

Der räumliche Bereich, innerhalb dem der Packer arbeiten muss, ist somit stark begrenzt. Dies erfüllt höchste ergonomische Ansprüche. Der Packer muss sich wenig bewegen, um Artikel zu greifen und zu packen.

Vorzugsweise ist die Fördertechnik für Ladehilfsmittel unterhalb der Bahn angeordnet.

Da die Ladehilfsmittel in der Regel viel größer sind als einzelne Artikel, ist es einfacher, die umfangreichere Fördertechnik unterhalb der Bahn anzuordnen, da die Bahn lediglich einzelne Artikel zur Packstation fördern muss. Die Bahn ist geometrisch kleiner und weniger komplex aufgebaut als die Fördertechnik.

Insbesondere ist der Bereich durch eine Reichweite eines Arms eines Mitarbeiters definiert.

Durch diese Maßnahme ist gewährleistet, dass der Packer beim Packen nicht laufen muss.

Die obige Aufgabe wird ferner durch ein Verfahren zum Packen von zu kommissionierenden Artikeln auf einen Versandträger mit den folgenden Schritten gelöst: Transportieren von zu kommissionierenden Artikeln, die auf Ladehilfsmitteln gelagert sind, von einem Lager für Ladehilfsmittel über eine Fördertechnik für Ladehilfsmittel zu einer Packstation sowie von einzelnen zu kommissionierenden Artikeln zur Packstation; Andienen der zu kommissionierenden Artikel über eine Bahn für die einzelnen Artikel und über die Fördertechnik für Ladehilfsmittel für solche Artikel, die auf Ladehilfsmitteln gelagert sind; und Packen der angedienten Artikel auf einen Versandträger.

Vorzugsweise wird der Versandträger schichtweise abgesenkt, wenn eine Schicht von Artikeln auf dem Versandträger gepackt ist.

Insbesondere werden die Ladehilfsmittel sortenrein zur Packstation transportiert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische Ansicht eines Kommissioniersystems;
- Figur 2: eine perspektivische Ansicht einer Palettenfördertechnik und Palettenvereinzelungsstation;
- Figur 3: eine perspektivische Ansicht von zwei Arbeitsebenen, wobei ein Arbeitsplatz auf einer höheren Ebene gelegen ist;
- Figur 4: eine andere perspektivische Ansicht der Figur 3;
- Figur 5: einen Arbeitsplatz gemäß der vorliegenden Erfindung in perspektivischer Ansicht; und
- Figur 6: einen weiteren Arbeitsplatz gemäß der vorliegenden Erfindung in perspektivischer Ansicht.

Bei der Beschreibung der nachfolgenden Figuren werden für gleiche Elemente gleiche Bezugszeichen verwendet werden.

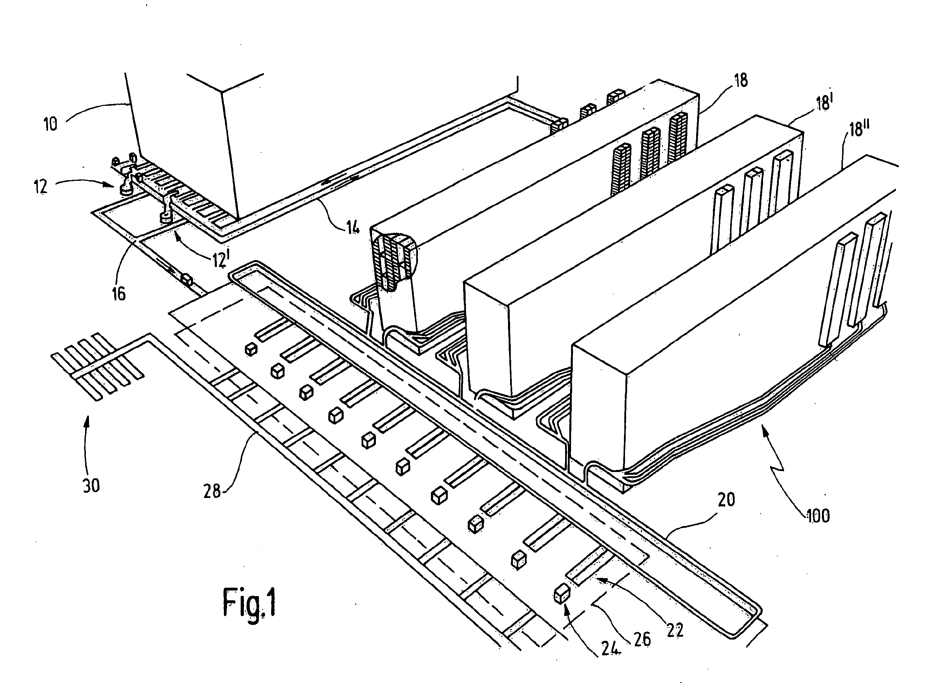

Figur 1 zeigt eine Kommissionieranlage 100.

Die Kommissionieranlage 100 umfasst ein Hochregallager 10, in welchem zu kommissionierende Artikel auf Ladehilfsmitteln, insbesondere auf Eurpaletten, gespeichert sind. Jede Europalette beinhaltet eine Vielzahl (sortenreiner) zu kommissionierender Artikel, die vorzugsweise in schichtweisen Palettenlagen angeordnet sind.

Die Kommissionieranlage 100 weist ferner Depalettierungsstationen 12, 12', Fördertechniken 14, 16, 20 und 28, Regallager 18, 13' und 18", einen Bereich 26 für Arbeitsplätze 24 sowie einen Versandbereich 30 auf.

Unter dem Begriff "Fördertechnik" werden nachfolgend Einrichtungen verstanden, wie zum Beispiel Rollenbahnen, Bandförderer, Hängeförderer, etc., mit denen Artikel direkt oder in bzw. auf Ladehilfsmitteln, wie zum Beispiel, Paletten, Tablaren, Behältern etc., zwischen einzelnen Komponenten der Kommissionieranlage 100 transportiert werden können.

Die Depalettierungsstationen 12, 12' vereinzeln die zu kommissionierenden Artikel, die in dem Hochregallager 10 auf Europaletten gelagert sind. Vorzugsweise werden die Europaletten schichtweise depalettiert. Leere Paletten können mit der Fördertechnik 16 zum Bereich 26 transportiert werden. Depalletierte Artikel können mittels der Fördertechnik 14 zu den Regallagern 18-18" transportiert werden, um dort eingelagert zu werden. Die Einlagerung erfolgt hier vorzugsweise auf Tablaren, wobei die Tablare vorzugsweise mit jeweils einer Palettenlage bestückt sind.

Mittels der Fördertechnik 20 werden die Tablare anschließend gemäß Kommissionieraufträgen zum Bereich 26 transportiert, wo an den Arbeitsplätzen 24 ein Packvorgang stattfindet, bei dem zu packende Artikel auf einen Versandträger, insbesondere Paletten oder Roll-Container, geladen werden. Der Bereich 26 liegt auf einem höheren Niveau als die Fördertechnik 28. Die Fördertechnik 28 dient zum Transport fertig gepackter Versandträger zum Bereich 30, wo die Versandträger versandfertig gemacht werden, um schließlich, zum Beispiel mittels LKW, ausgeliefert zu werden.

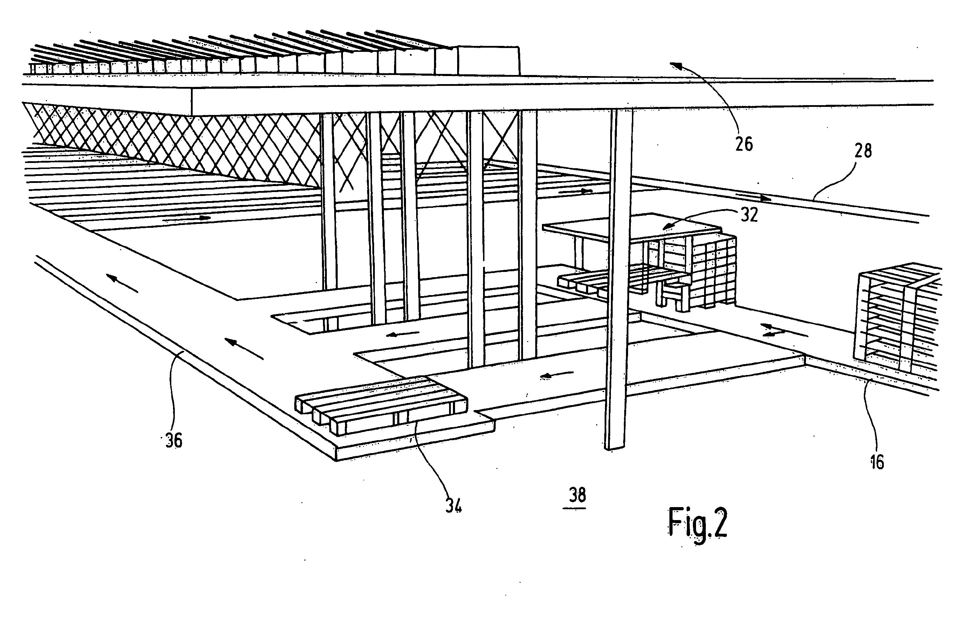

Figur 2 zeigt eine perspektivische Ansicht unter eine Plattform, auf der der Bereich 26 angeordnet ist. In der Figur 2 werden mittels der Fördertechnik 16 leere Versandträger, hier Palettenstapel, zu einer Vereinzelungsstation 32 für Versandträger 34 transportiert. Die Vereinzelungsstation 32 vereinzelt die Palettentapel. Die Vereinzelungsstation 32 ist optional vorgesehen und kann auch weggelassen werden, wenn die Depalettierungsstationen 12, 12' (vgl. Figur 1) keine Palettenstapel bilden, die sie über die Fördertechnik 16 in Richtung Packbereich 26 schicken. Alternativ können leere Versandträger 34 auch auf einem anderen Wege bereitgestellt werden.

Vereinzelte Versandträger 34 werden mittels einer weiteren Fördertechnik 36 unter den Bereich 26 verbracht. Die Fördertechnik 36 ist auf einem unteren Niveau 38, hier dem Hallenboden, angeordnet.

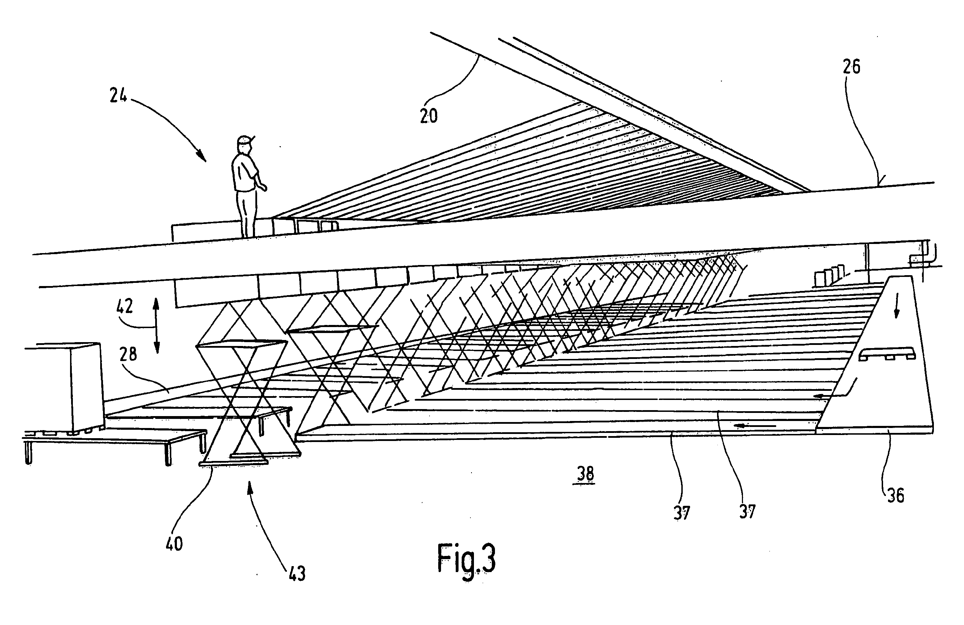

In der Darstellung der Figur 3 blickt man auf das Ende der Fördertechnik 36 der Figur 2.

Die Fördertechnik 36 weist Stichstrecken 37 auf, die zu Hubeinrichtungen 40 führen, um leere Versandträger 34 an Arbeitsplätze 24, die sich in einem darüber liegenden Niveau befinden, zu liefern. Die Hubeinrichtungen 40 sind in Vertikalrichtung 42 (vgl. Doppelpfeil) insbesondere zwischen einer ersten Stellung und einer zweiten Stellung beweglich. In der ersten Stellung ist die Hubeinrichtung 40 auf das Niveau 38 abgesenkt, um leere Versandträger 34 von den Stichstrecken 37 übernehmen zu können. Dazu weist die Hubeinrichtung 40 vorzugsweise ein entsprechendes Lastaufnahmemittel auf, das zur Aufnahme und Abgabe von Versandträgern geeignet ist. In der zweiten Stellung ist die Hubeinrichtung 40 derart verfahren, dass ein Versandträger in Höhe des Arbeitsplatzes 24 angedient wird, wie es später noch ausführlicher erläutert werden wird.

Auf dem Niveau 38 sind also Versandträgerstationen 43 angeordnet, die zumindest die Hubeinrichtung 40 umfassen.

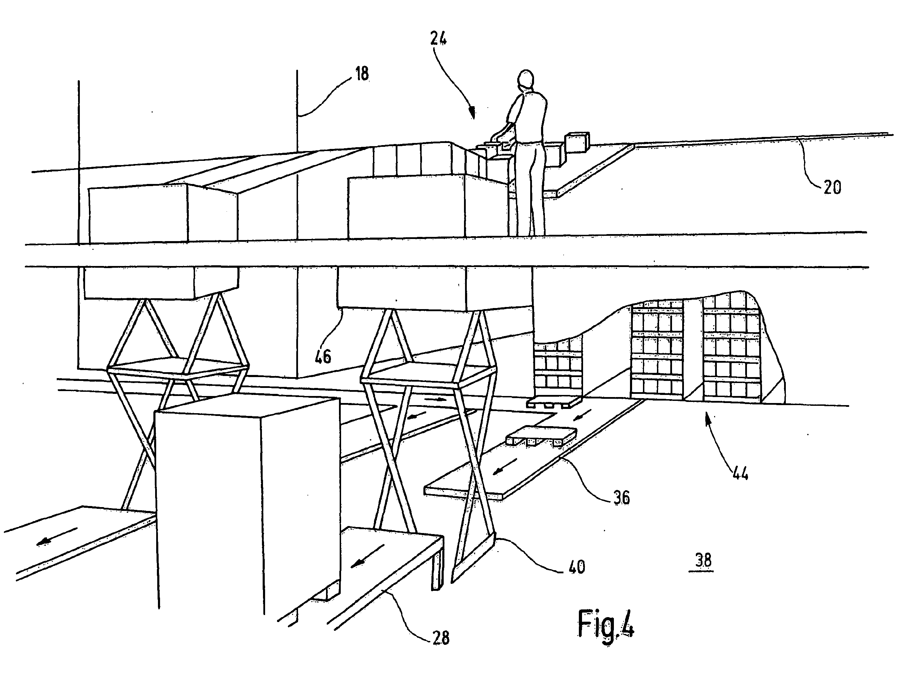

Bezug nehmend auf Figur 4 ist eine andere perspektivische Ansicht der Figur 3 gezeigt.

Unterhalb der Plattform, auf der der Arbeitsplatz 24 angeordnet ist, ist eine Wickeleinrichtung 46, vorzugsweise direkt darunter, angeordnet. Mit Hilfe der Wickeleinrichtung 46 lassen sich Folienbahnen außenumfänglich um den Versandträger (hier nicht dargestellt) führen, so dass Artikel, die auf diesen Versandträger gestapelt wurden, mit der Folie umwickelt werden können, wenn der Versandträger mittels der Hubeinrichtung 40 entsprechend abgesenkt wurde. Sobald eine Schicht auf dem Versandträger (vollständig) bepackt ist, wird die Hubeinrichtung 40 um die Höhe dieser Schicht abgesenkt. Dies kann automatisiert oder durch einen Kommissionierer bewirkt werden.

In der Figur 4 ist neben den Regallagern 18 ein Lager 44 für einzelne Artikel dargestellt, welches in der Figur 1 nicht gezeigt ist.

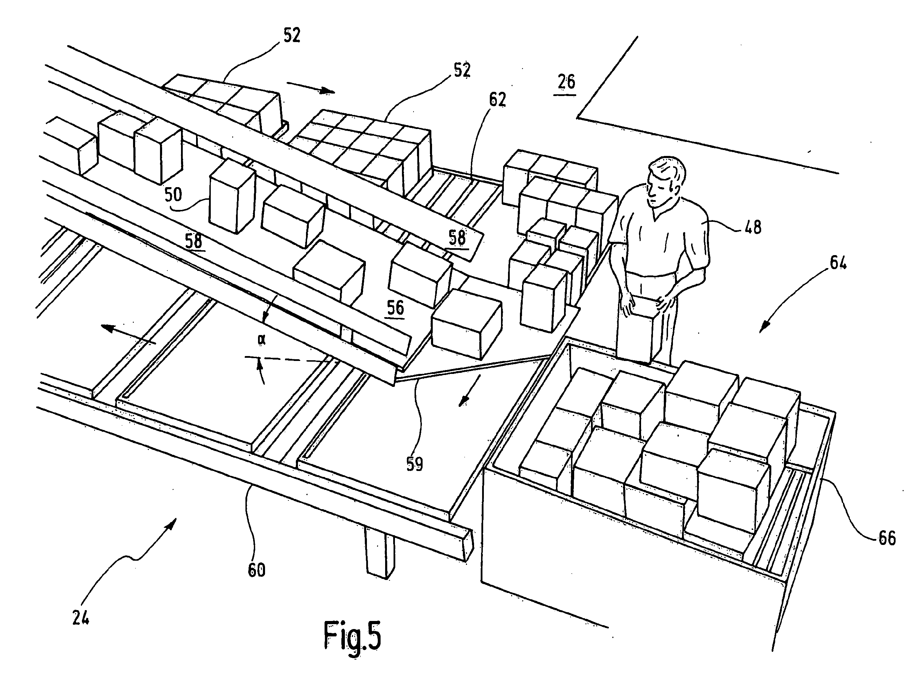

In Figur 5 ist ein Arbeitsplatz 24 gemäß der vorliegenden Erfindung im Detail gezeigt. Der Arbeitsplatz 24 zum Packen von zu kommissionierenden Artikeln wird von einem Packer 48 bedient.

Der Packer 48 packt einzelne Artikel 50 oder Artikel einer Artikelschicht 52 auf einen Versandträger. Die Artikelschicht 52 besteht aus einer Vielzahl von einzelnen Artikeln 50, die auf einem Tablar 54, insbesondere in Form einer Palettenlage, am Arbeitsplatz 24 bereitgestellt werden.

Die einzelnen Artikel 50 werden hier über eine Bahn 56, die hier seitliche Führungsflächen 58 aufweist, zum Packer 48 geleitet. Die Bahn 56 kann in einer Ablage 59 enden, von der der Packer 48 die zu kommissionierenden Artikel 50 entnehmen kann. Die Ablage 59 verhindert zum einen, dass die Artikel 50 von der Bahn 56 herunterfallen. Zum anderen gewinnt der Packer 48 Zeit, um zu entscheiden, wo er die Artikel 50 auf den Versandträger platziert, oder um Artikel von Tablaren zu packen. Die Bahn 56 wird vorzugsweise zur Anlieferung von Langsamläufern verwendet. Sie kann aus Rollen gebildet sein, von denen vorzugsweise einige gebremst sind.

Unter dem Begriff "Langsamläufer" werden Artikel verstanden, die statistisch weniger häufig pro Kommissionierauftrag auftreten und deshalb nicht so oft angefordert werden, wie Schnellläufer. Schnellläufer (A-Artikel) werden vorzugsweise auf den Tablaren 54 über eine Fördertechnik 60 für Ladehilfsmittel zum Arbeitsplatz 24 transportiert. Bei der Fördertechnik 60 handelt es sich hier um eine Rollenbahn, die aus Rollen 62 gebildet ist. Es kann aber auch eine andere Fördertechnik (Tragketten, Riemenförder, vorzugsweise doppeltspurig, etc.) eingesetzt werden.

Der Packer 48 entnimmt also entweder Artikel 50 von der Ablage 59 oder Artikel 52 von den Tablaren 54 (Tragkraft bis zu 250 kg), um sie in eine Packstation 64, die vorzugsweise einen Rahmen 66 aufweist, zu packen. Der Rahmen 66 dient zur seitlichen Stabilisierung der gepackten Artikel. Zumindest eine Seite des Rahmens 66 kann klappbar oder versenkbar ausgebildet sein, um dem Packer den Zugang zu dem Versandträger zu erleichtern. Ferner können Störungen so leichter behoben und Servicearbeiten einfacher durchgeführt werden. Der Zugang zum Versandträger ist grundsätzlich von drei Seiten möglich, was einen weiteren Vorteil der vorliegenden Erfindung darstellt, da sich der Packer 48 nicht über Gebühr strecken muss, sondern einfach von einer anderen Seite packen kann.

Falls die Artikel nicht direkt auf einen Versandträger, wie z.B. einen Rollcontainer, gepackt werden können, da die seitlichen Stützelemente des Rollcontainers aus der Packstation herausragen würden und den Packvorgang behindern würden, kann alternativ eine Stapelplatte, wie z.B. ein Blech, verwendet werden. Auf dieses Blech werden die Artikel gestapelt. Wenn der Artikelstapel fertig gepackt ist, wird das Blech auf einem Versandträger (vertikal) abgesetzt und (horizontal) herausgezogen, ähnlich wie ein Tortenheber unter einem Stück Kuchen herausgezogen wird.

In der Figur 5 ist der Versandträger nicht zu sehen, da bereits eine Vielzahl von Artikeln auf ihm gestapelt sind. Es versteht sich, dass die Figur 5 eine Draufsicht auf die Plattform der Figuren 2 bzw. 3 zeigt. Leere Versandträger 34 werden von dem unter der Plattform liegenden Niveau 38 mittels der Hubeinrichtung 40 (vgl. Figuren 3 und 4) auf das Niveau des Arbeitsplatzes 24 angehoben. Sobald eine Schicht auf dem Versandträger vollständig bepackt ist, kann die Hubeinrichtung 40 um eine Schichthöhe entweder automatisiert oder durch eine Tastenbetätigung (Taste in Figur 5 nicht dargestellt) durch den Packer 48 abgesenkt werden. Wird eine Stapelplatte verwendet, wird der Versandträger auf Höhe des Niveaus 38 bereitgestellt und die Stapelplatte wird schrittweise abgesenkt.

Ferner besteht die Fördertechnik 60 der Figur 5 aus zwei Strecken. Die eine Strecke dient zur Anlieferung von beladenden Tablaren 54, wohingegen die andere Strecke zum Abtransport der Tablare 54 dient. Der Wechsel von der einen zur anderen Strecke kann ebenfalls automatisiert erfolgen.

Ferner ist festzustellen, dass die Bahn 56 leicht gegenüber der Horizontalen, in der die Fördertechnik 60 angeordnet ist, mit einem Winkel α geneigt ist. Die Bahn 56 ist deshalb geneigt, damit die Artikel 50 aufgrund der Schwerkraft (notfalls) von allein zur Ablage 59 rutschen. Hier können, wie bereits oben erwähnt, Rollenbahnen eingesetzt werden, die gebremst und getaktet betrieben werden können.

Außerdem kann der Arbeitsfluß umgekehrt werden. Dies bedeutet, dass der Arbeitsplatz auch zur Einlagerung von Artikeln ins Lager benutzt werden kann. Einzulagernde Artikel werden über die Packstation angedient. Der Packer 48 entnimmt die Artikel und packt sie auch Tablare, die wiederum ins Lager transportiert werden. Es versteht sich, dass der Packer auch durch einen entsprechend ausgelegten Roboter ersetzt werden könnte.

Diese Umkehrung des Arbeitflusses hat den Vorteil, dass in Zeiten geringeren Packaufkommens das Lager wieder gefüllt werden kann, und zwar von solchen Packern, die mit Packvorgängen nicht ausgelastet sind.

Ferner können Retour-Artikel, die auf Paletten angeliefert werden, aufgelöst und ins Lager rückgelagert werden.

Es versteht sich ferner, dass eine oder mehrere Bahnen 56 zum Kommissionierer 48 geführt werden können.

Ebenso können mehrere Fördertechnikstrecken für Ladehilfsmittel vorgesehen werden. So können z.B. drei Strecken vorgesehen werden, von denen die beiden außenliegenden Strecken Tablare liefern und die mittig liegende Strecke leere oder teilweise leere Tablare abtransportiert. In diesem Fall ist es von Vorteil, wenn zwei Packer 48 gleichzeitig an der Packstation arbeiten. Es versteht sich, dass auch mehrere Packer an der Packstation arbeiten könnten.

Der Arbeitsplatz 24 zeichnet sich unter anderem durch seine hohe Ergonomie aus. Der Packer 48 muss sich nahezu nicht bewegen (laufen), um Artikel zu packen. Sollte es sich dennoch ergeben, dass der Packer 48 einen Ort auf dem Versandträger nicht gut erreichen kann, so kann der Packer 48 um den Rahmen 66 laufen, um eine bessere Position zum Packen zu bekommen. Vorzugsweise läuft der Packer 48 jedoch nicht. Die Lasten, die vom Packer 48 bewegt werden müssen, beschränken sich auf das Eigengewicht der Artikel. Die Tablare 54 müssen nicht vom Packer 48 bewegt werden. Der Durchsatz erhöht sich enorm. Schnellläufer werden über Tablare und Langsamläufer über die Bahn 56 zum Arbeitsplatz 24 transportiert.

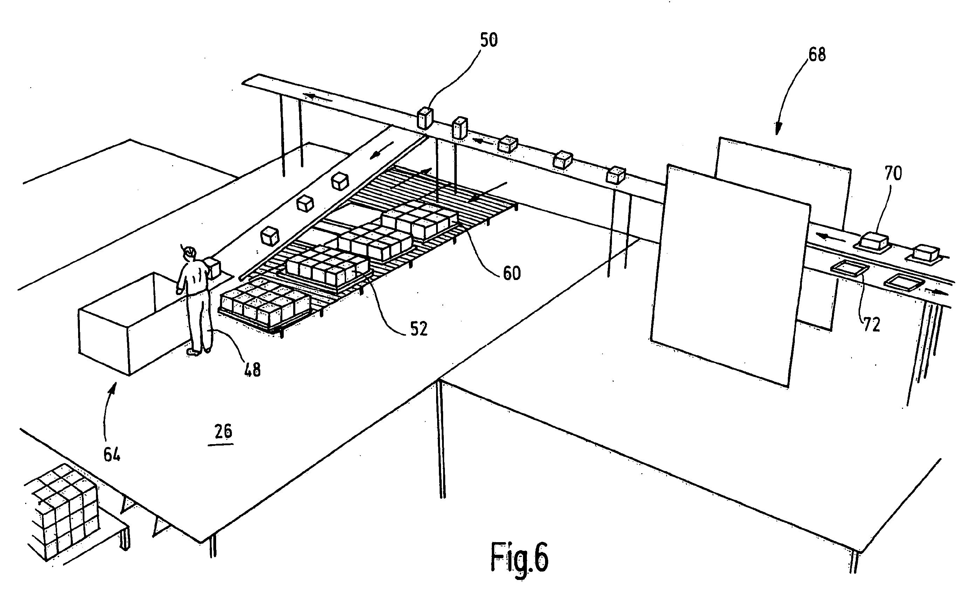

Figur 6 zeigt den Arbeitsplatz der Figur 5 aus einer entfernten Position.

In der rechten Hälfte der Figur 6 ist des Weiteren eine Trennstation 68 vorgesehen, die zum Beispiel an die Fördertechnik 20 (vgl. Figur 1) angekoppelt ist. Die Fördertechnik 20 kann auch mit der Fördertechnik 60 verbunden sein, so dass Artikelschichten (Palettenlagen) 52 und Einzelartikel 70 (auch auf Tablaren) zum Arbeitsplatz 24 geliefert werden können, und zwar über die Fördertechnik 20. Leere Tablare 72 können beispielsweise zu den Depalettierungsstationen 12, 12' (vgl. Figur 1) transportiert werden, um anschließend wieder mit Artikeln in die Regallager 18 eingelagert zu werden.

Es versteht sich, dass mehrere Arbeitsplätze 24 gemäß der vorliegenden Erfindung nebeneinander angeordnet werden können (vgl. Figur 1). Nahezu alle Vorgänge in der Kommissionieranlage 100 werden von einem oder mehreren übergeordneten Lagerrechnern koordiniert und gesteuert.

Alternativ können die Tablare auch an mehreren Arbeitsplätzen vorbei geführt werden. Die Tablare können im Bereich des Anfangs der Bahn 56 durch einen Kommissionierer (in den Figuren nicht gezeigt) entladen werden, indem der Kommissionierer Artikel vom Tablar entnimmt und diese auf die Bahn gibt. Diese Vorgehensweise hat den Vorteil, dass nicht jedes Tablar bis zur Packstation geführt werden muss. So kann eine Mehrstoppstrategie für die Ladehilfsmittel verfolgt werden.

## Patentansprüche

1. Kommissionieranlage (100) mit einem Arbeitsplatz (24) zum Packen von zu kommissionierenden Artikeln (50, 52) auf einen Versandträger (34), insbesondere auf eine Palette oder in einen Roll-Container, wobei der Arbeitsplatz (24) umfasst:
eine Packstation (64);
eine Bühne (26), auf der die Packstation (24) angeordnet ist;
eine Versandträgerstation (43), die unterhalb der Bühne (26) angeordnet ist;
eine Hubeinrichtung (40) zum Anheben eines leeren oder teilweise bepackten Versandträgers (34) auf eine Höhe der Packstation (24), so dass der leere oder teilweise bepackte Versandträger (34) mit zu kommissionierenden Artikeln (50, 52) bepackt werden kann, und zum Absenken fertig bepackter Versandträger (34);
eine zur Packstation (64) hin gerichtete Bahn (56) zum Transport von einzelnen zu kommissionierenden Artikeln (50) zur Packstation (64), wobei die Bahn (56) an eine Artikel-Fördertechnik (20) zum Transportieren von einzelnen, zu kommissionierenden Artikeln (50) von einem Einzelartikellager (44) zum Arbeitsplatz (24) gekoppelt ist
**dadurch gekennzeichnet daß** der Arbeitsplatz umfasst:
eine Fördertechnik (60) für Ladehilfsmittel (54), die zu kommissionierende Artikel (52) auf Ladehilfsmitteln (54) zur Packstation (64) fördert, so dass entweder Artikel (50) von der Bahn (56) oder von der Fördertechnik (60) für Ladehilfsmittel (54) gepackt werden können;
einem Ladehilfsmittellager (18), das über die Fördertechnik (60) für Ladehilfsmittel (54) mit dem Arbeitsplatz (24) verbunden ist; und dem Einzelartikellager (44).

2. Kommissionieranlage (100) nach Anspruch 1, wobei die Bahn (56) packstationsseitig eine, insbesondere horizontal angeordnete, Ablageeinrichtung (59) aufweist.

3. Kommissionieranlage (100) nach Anspruch 1 oder 2, wobei die Bahn (56) nach Art einer weiteren Fördertechnik (20) gebaut ist.

4. Kommissionieranlage (100) nach Anspruch 1, wobei die Ladehilfsmittel (54) Tablare sind, die mit einer Palettenlage von Artikeln (52) bestückt sind.

5. Kommissionieranlage (100) nach Anspruch 4, wobei die Artikel-Fördertechnik (20) sowohl zum Fördern von Einzelstückgut (50) als auch von Ladehilfsmitteln (54), auf denen bzw. in denen die zu kommissionierenden Artikel (52) gelagert sind, geeignet ist.

6. Kommissionieranlage (100) nach Anspruch 4 oder 5, wobei die Artikel-Fördertechnik (20) stromaufwärts relativ zur Bahn eine Trennstation (68) zum Trennen der zu kommissionierenden Artikel (50) von Ladehilfsmitteln (54) aufweist.

7. Kommissionieranlage (100) nach einem der Ansprüche 1 bis 6, wobei die Packstation (64) ein Lichtgitter umfasst, das derart über einem zu bepackenden Versandträger (54) angeordnet ist, dass erfasst werden kann, ob eine Packperson (48) eine seiner Gliedmaßen im Bereich des zu bepackenden Versandträgers (54) hat, um entsprechende Steuersignale zu erzeugen, mit denen die Bewegung der Hubeinrichtung (40) gesteuert wird.

8. Kommissionieranlage (100) nach einem der Ansprüche 1 bis 7, wobei die Fördertechnik (60) für Ladehilfsmittel einen Bereich durchquert, in dem sowohl die Packstation (64) als auch das packstationsseitige Ende der Bahn (56) angeordnet sind.

9. Kommissionieranlage (100) nach Anspruch 8, wobei die Fördertechnik (60) für Ladehilfsmittel (54) unterhalb der Bahn (56) angeordnet ist.

10. Kommissionieranlage (100) nach Anspruch 9, wobei der Bereich durch eine Reichweite eines Arms einer Packperson (48) definiert ist, so dass die Packperson (48) zum Packen auf den Versandträger nicht laufen muss.

11. Kommissionieranlage (100) nach einem der vorhergehenden Ansprüche, wobei die Fördertechnik (60) für Ladehilfsmittel (54) eine Zuführtrecke und eine Abführstrecke aufweist.

12. Kommissionieranlage (100) nach Anspruch 11, wobei zwei Zuführstrecken vorgesehen sind, die die Abführstrecke mittig umgegeben, wobei die Strecken vorzugsweise parallel zur Bahn orientiert sind.

13. Verfahren zum Packen von zu kommissionierenden Artikeln (50, 52) auf einen Versandträger (34) **gekennzeichnet durch** den folgenden Schritten:
Transportieren von zu kommissionierenden Artikeln (52), die auf Ladehilfsmitteln (54) gelagert sind, von einem Lager (18) für Ladehilfsmittel (54) über eine Fördertechnik (20, 60) für Ladehilfsmittel zu einer Packstation (64) sowie von einzelnen, zu kommissionierenden Artikeln (50) zur Packstation (64);
Andienen der zu kommissionierenden Artikel (50, 52) über eine Bahn (56) für die einzelnen Artikel (50) und über die Fördertechnik (60) für Ladehilfsmittel (54) für die Artikel (52), die auf Ladehilfsmitteln (54) gelagert sind; und
Packen der angedienten Artikel (50, 52) auf einen Versandträger (54).

14. Verfahren nach Anspruch 13, wobei bei geringer Arbeitsauslastung eine Arbeitsrichtung umgekehrt wird, so dass Ladehilfsmittel des Wareneingangs angedient werden, um Artikel an der Packstation auf Ladehilfsmittel zur Verbringung in ein angeschlossenes Lager umzuladen.

15. Verfahren nach Anspruch 14, wobei Retourenartikel über die Packstation in das Lager rückgelagert werden.

## Claims

1. An order-picking system (100) having a work station (24) for packing articles (50, 52), which are to be picked, onto a shipping support (34), particularly onto a pallet or into a roller container, wherein the work station (24) comprises:
a packing station (64);
a platform (26) on which the packing station (24) is arranged;
a shipping support station (43) arranged beneath the platform (26);
a lifting device (40) for lifting an empty or partially packed shipping support (34) to a height of the packing station (24) so that the empty or partially packed shipping support (34) can be packed with articles (50, 52) to be picked, and for lowering completely packed shipping supports (34); and
a track (56), which is tilted towards the packing station (64), for transporting individual articles (50), which are to be picked, to the packing station (64), the track (56) is coupled to an article conveyor (20) for transporting single articles (50, 52), which are to be picked, from a single-article warehouse (44) to the work station (24), and
a conveyor (60) dedicated to load supports (54) conveying articles (52), which are to be picked, on load supports (54) to the packing station (64) so that either articles (50) from the track (56) or from the conveyor (60) dedicated to load supports (54) can be packed;
a load support warehouse (18) which is connected to the work station (24) via the conveyor (60) dedicated to load supports (54); and
the single-article warehouse (44).

2. The order-picking system (100) of claim 1, wherein the track (56) comprises a delivery device (59), particularly being arranged horizontally, at a side of the packing station.

3. The order-picking system (100) of claim 1 or 2, wherein the track (56) is constructed of a type of another conveyor (20).

4. The order-picking system (100) of claim 1 or 2, wherein the load supports (54) are trays loaded with pallet layers of articles (52).

5. The order-picking system (100) of claim 4, wherein the article conveyor (20) is suitable for both conveyance of single goods (50) and conveyance of load supports (54) on which or in which the articles (52), which are to be picked, are stored.

6. The order-picking system (100) of claim 4 or 5, wherein the article conveyor (20) comprises a separating station (68), upstream relative to the track, in order to separate the articles (50), which are to be picked, from the load supports (54).

7. The order-picking system (100) of any of the claims 1 to 6, wherein the packing station (64) comprises a light grid arranged above a shipping support (54) which is to be packed such that it can be detected whether a packing person (48) has one of his/her extremities within an area of the shipping support (54) which is to be packed, in order to generate corresponding control signals for controlling movement of the lifting device (40).

8. The order-picking system (100) of any of the claims 1 to 7, wherein the conveyor (60) dedicated to load supports traverses an area in which both the packing station (64) and the end of the track (56) at the side of the packing station are arranged.

9. The order-picking system (100) of claim 8, wherein the conveyor (60) dedicated to load supports is arranged beneath the track (56).

10. The order-picking system (100) of claim 9, wherein the area is defined by a packing person's (48) arm range so that the packing person (48) does not need to walk for packing on the shipping support.

11. The order-picking system (100) of any of the preceding claims, wherein the conveyor (60) dedicated to load supports comprises a feeding track and an output track.

12. The order-picking system (100) of claim 11, wherein two feeding tracks are provided surrounding the output track centrally, wherein the tracks are preferably oriented parallel to the track.

13. A method for packing articles (50, 52), which are to be picked, onto a shipping support (34) having the following steps:
transporting articles (52), which are to be picked, stored on load supports (54) from a warehouse (18) dedicated to load supports (54) via a conveyor (20, 60) dedicated to load supports to a packing station (64), as well as transporting single articles (50), which are to be picked, to the packing station (64);
serving articles (50, 52), which are to be picked, via a track (56) dedicated to the single articles (50) and via the conveyor (60) dedicated to load supports (54), which are, in turn, dedicated to the articles (52) being stored on the load supports (54); and
packing the served articles (50, 52) on a shipping support (54).

14. The method of claim 13, wherein during lower capacity utilization a workflow is inversed so that load supports of the goods receipt are served in order to rehandle articles onto load supports at the packing station which are to be brought into a warehouse connected thereto.

15. The method of claim 14, wherein return articles are re-stored via the packing station into the warehouse.

## Revendications

1. Installation de préparation de commande (100) avec un poste de travail (24) pour emballer des articles à expédier (50, 52) sur un support d'expédition (34), notamment sur une palette ou dans un chariot à roulettes, le poste de travail (24) comprenant :
une station de remplissage (64) ;
un plan surélevé (26) sur lequel la station de remplissage (64) est disposée ;
une station de support d'expédition (43) disposée en dessous du plan surélevé (26) ;
un dispositif de levage (40) pour soulever un support d'expédition (34) vide ou en partie rempli à une certaine hauteur de la station de remplissage (64), de sorte que le support d'expédition (34) vide ou en partie rempli peut être rempli d'articles à expédier (50, 52), et
pour abaisser le support d'expédition (34) rempli ;
une courroie (56) conduisant à la station de remplissage (64) pour transporter des articles à expédier (50) individuels jusqu'à la station de remplissage (64), la courroie (56) étant couplée à un moyen technique de transport d'article (20) pour transporter des articles à expédier (50) individuels d'un entrepôt d'articles individuels (44) au poste de travail (24) ;
**caractérisée en ce que** le poste de travail comprend :
un moyen technique de transport (60) pour moyens d'aide au chargement (54) transportant les articles à expédier (52) sur les moyens d'aide au chargement (54) jusqu'à la station de remplissage (64), de sorte que les articles (50) peuvent être amenés soit par la courroie (56) soit par le moyen technique de transport (60) pour moyens d'aide au chargement (54) ;
un entrepôt de moyens d'aide au chargement (18) qui est relié au poste de travail (24) par le biais du moyen technique de transport (60) pour moyens d'aide au chargement (54) ; et un entrepôt d'articles individuels (44).

2. Installation de préparation de commande (100) selon la revendication 1, la courroie (56) comportant du côté de la station de remplissage un dispositif de dépôt (59) disposé notamment dans le plan horizontal.

3. Installation de préparation de commande (100) selon la revendication 1 ou 2, la courroie (56) étant réalisée à la façon d'un autre moyen technique de transport (20).

4. Installation de préparation de commande (100) selon la revendication 1, les moyens d'aide au chargement (54) étant des étagères pourvues d'une couche de palette d'articles (52).

5. Installation de préparation de commande (100) selon la revendication 4, le moyen technique de transport d'article (20) étant adapté tant pour transporter des articles individuels (50) que des moyens d'aide au chargement (54) sur lesquels et/ou dans lesquels les articles à expédier (52) sont disposés.

6. Installation de préparation de commande (100) selon la revendication 4 ou 5, le moyen technique de transport d'article (20) comportant en amont par rapport à la courroie une station de séparation (68) pour séparer les articles à expédier (50) des moyens d'aide au chargement (54).

7. Installation de préparation de commande (100) selon l'une quelconque des revendications 1 à 6, la station de remplissage (64) comprenant une claire-voie disposée au-dessus d'un support d'expédition (34) à remplir de telle sorte qu'il est possible de détecter si une personne chargée du remplissage (48) a un de ses membres dans la zone du support d'expédition (34) à remplir, pour produire des signaux de commande correspondants permettant de commander le déplacement du dispositif de levage (40).

8. Installation de préparation de commande (100) selon l'une quelconque des revendications 1 à 7, le moyen technique de transport (60) pour moyens d'aide au chargement traversant une zone dans laquelle tant la station de remplissage (64) que l'extrémité de la courroie (56) située du côté de la station de remplissage sont disposées.

9. Installation de préparation de commande (100) selon la revendication 8, le moyen technique de transport (60) pour moyens d'aide au chargement (54) étant disposé en dessous de la courroie (56).

10. Installation de préparation de commande (100) selon la revendication 9, la zone étant définie par la portée d'un bras d'une personne chargée du remplissage (48), de sorte que la personne chargée du remplissage (48) n'a pas besoin de marcher pour réaliser le remplissage sur le support d'expédition.

11. Installation de préparation de commande (100) selon l'une quelconque des revendications précédentes, le moyen technique de transport (60) pour moyens d'aide au chargement (54) comportant un tronçon d'amenée et un tronçon d'évacuation.

12. Installation de préparation de commande (100) selon la revendication 11, deux tronçons d'amenée étant prévus, entourant de façon centralisée le tronçon d'évacuation, les tronçons étant de préférence orientés parallèlement à la courroie.

13. Procédé de remplissage d'articles à expédier (50, 52) sur un support d'expédition (34), **caractérisé par** les étapes suivantes :
transport d'articles à expédier (52) disposés sur des moyens d'aide au chargement (54), depuis un entrepôt (18) pour moyens d'aide au chargement (54) via un moyen technique de transport (20, 60) pour moyens d'aide au chargement jusqu'à une station de remplissage (64), ainsi que d'articles à expédier (50) individuels jusqu'à la station de remplissage (64) ; mise à disposition des articles à expédier (50, 52) par le biais d'une courroie (56) pour les articles individuels (50) et par le biais du moyen technique de transport (60) pour moyens d'aide au chargement (54) pour les articles (52) disposés sur les moyens d'aide au chargement (54) ; et
emballage des articles (50, 52) mis à disposition sur un support d'expédition (34).

14. Procédé selon la revendication 13, dans lequel en cas de charge de travail réduite, la direction de travail est inversée de sorte que les moyens d'aide au chargement servant à amener des marchandises sont utilisés pour charger des articles au niveau de la station de remplissage sur des moyens d'aide au chargement en vue de les ramener dans un entrepôt rattaché.

15. Procédé selon la revendication 14, dans lequel les articles retournés sont ramenés dans l'entrepôt via la station de remplissage.
